# EUROPÄISCHE PATENTSCHRIFT

(11) **EP 3 960 668 B1**
(45) Veröffentlichungstag und Bekanntmachung des Hinweises auf die Patenterteilung: **01.10.2025**
(21) Anmeldenummer: 20305960.5
(22) Anmeldetag: 28.08.2020
(51) Int. Cl.: B65G 54/02, H02J 50/12

(54) **LINEARMOTORSYSTEM UND VERFAHREN ZUM BETREIBEN EINES SOLCHEN**
LINEAR MOTOR SYSTEM AND METHOD FOR OPERATING SAME
SYSTÈME DE MOTEUR LINÉAIRE ET PROCÉDÉ DE FONCTIONNEMENT D'UN TEL SYSTÈME

(43) Veröffentlichungstag der Anmeldung: 02.03.2022
(73) Patentinhaber: Schneider Electric Industries SAS, 92500 Rueil Malmaison (FR)
(72) Erfinder: Müllerschön, Volker, 97204 Höchberg (DE)
(74) Vertreter: Manitz Finsterwald Patent- und Rechtsanwaltspartnerschaft mbB

(56) Entgegenhaltungen:
- WO-A1-2019/007923
- CN-A- 111 130 299
- DE-A1- 102017 221 207
- DE-A1- 102018 218 666
- US-A1- 2016 114 988
- US-A1- 2020 044 593

## Beschreibung

Die Erfindung betrifft ein Linearmotorsystem und ein Verfahren zum Betreiben eines solchen. Das Linearmotorsystem weist zumindest einen Läufer und eine Führungsbahn mit einer Vielzahl von entlang der Führungsbahn verteilt angeordneten Elektromagneten auf, die mit einem Antriebsmagneten des Läufers zusammenwirken, um den Läufer entlang der Führungsbahn zu bewegen.

Linearmotorsysteme sind heute weit verbreitet. Sie können zum Beispiel dazu eingesetzt werden, Produkte in Industrieanlagen zu bewegen, insbesondere zu transportieren. Zum flexiblen Transport von verschiedensten Produkten sind Multi-Carrier-Systeme besonders vorteilhaft. Diese umfassen eine Vielzahl an Läufern, d.h. Transporteinheiten, die einzeln und unabhängig voneinander bewegbar sind. In einem typischen Multi-Carrier-System ist eine Führungsbahn für die Läufer in sich geschlossen, was einen Umlaufbetrieb ermöglicht.

Bei der Verwendung von Linearmotorsystemen ist es oft nicht nur erforderlich, ein Produkt entlang einer Führungsbahn des Linearmotorsystems zu bewegen, sondern auch, auf das Produkt entlang der Führungsbahn einzuwirken. Beispielsweise kann es notwendig sein, das Produkt während des Transports entlang der Führungsbahn zu drehen. Bei einer anderen Anwendung eines Linearmotorsystems kann es erforderlich sein, zunächst einen Behälter oder eine Verpackung herzustellen, wie etwa durch Falten einer Kartonage, und den Behälter oder die Verpackung während des weiteren Transports entlang der Führungsbahn mit einem Produkt oder Erzeugnis zu füllen sowie anschließend wieder zu verschließen.

Bei bekannten Linearmotorsystemen sind meistens passive Läufer oder Transporteinheiten vorhanden, die an sich keine Einwirkung auf die zu transportierenden Produkte gestatten. Stattdessen sind häufig externe Einrichtungen vorgesehen, die an bestimmten Positionen entlang der Führungsbahn angeordnet sind und mit dem Produkt während des Transports entlang der Führungsbahn wechselwirken.

Solche externen Einrichtungen benötigen jedoch zusätzlichen Raum entlang und neben der Führungsbahn, und sie erhöhen daher den Bedarf an Bauraum sowie die Kosten der gesamten Anlage, innerhalb derer sich das Linearmotorsystem befindet. Darüber hinaus sind solche externen Einrichtungen meist nicht flexibel veränderbar.

Aus der US 2016/0114988 A1 ist ein Linearmotorsystem und mit den Merkmalen gemäß dem Oberbegriff des Anspruchs 1 bekannt.

Die DE 10 2017 221 207 A1 beschreibt ein ähnliches Linearmotorsystem.

Ferner beschreibt die US 2020/0044593 A1 ein ähnliches Linearmotorsystem und ein Verfahren mit den Merkmalen gemäß dem Oberbegriff des Anspruchs 11.

Eine Aufgabe der Erfindung besteht darin, ein Linearmotorsystem und ein Verfahren zum Betreiben eines solchen anzugeben, bei welchen die Möglichkeit besteht bzw. geschaffen wird, an einem Läufer des Linearmotorsystems selbst ohne die Notwendigkeit einer externen Einrichtung auf einen zu transportierenden Gegenstand einzuwirken.

Diese Aufgabe wird durch die Gegenstände der unabhängigen Ansprüche gelöst.

Ein Linearmotorsystem, das insbesondere als Transportsystem und beispielsweise als Multi-Carrier-System ausgebildet ist, umfasst eine Führungsbahn mit einer Vielzahl von entlang der Führungsbahn verteilt angeordneten Elektromagneten und wenigstens einen Läufer, der von der Führungsbahn geführt und entlang dieser bewegbar ist und einen Antriebsmagneten zum Zusammenwirken mit den Elektromagneten der Führungsbahn zum Bewegen des Läufers umfasst. Das Linearmotorsystem umfasst ferner eine Steuerungseinrichtung zur Steuerung der Bewegung des Läufers relativ zur Führungsbahn, indem die Elektromagneten der Führungsbahn entsprechend angesteuert werden.

Der Läufer weist ferner einen Energieverbraucher auf, während die Führungsbahn mindestens eine stationäre Übertragungseinrichtung aufweist, die zum Bereitstellen von Energie vorgesehen ist und sich an einer vorbestimmten Position entlang der Führungsbahn befindet. Der Läufer weist dementsprechend eine Empfangseinrichtung auf, die ausgebildet ist, um Energie von der Übertragungseinrichtung der Führungsbahn zu empfangen. Zusätzlich weist der Läufer eine Energiespeichereinrichtung auf, die mit der Empfangseinrichtung und mit dem Energieverbraucher in Verbindung steht. Die Energiespeichereinrichtung des Läufers ist ausgebildet, um den Energieverbraucher während dessen Betrieb mit Energie zu versorgen.

Bei dem Energieverbraucher des Läufers handelt es sich beispielsweise um einen Aktor, der z.B. mechanisch auf ein Produkt oder ein Erzeugnis einwirkt, das mittels des Läufers transportiert wird, und/oder um einen Sensor, der in der Lage ist, bestimmte Eigenschaften des Produkts oder des Erzeugnisses zu erfassen. Der Energieverbraucher ist somit für eine Mindest-Leistungsaufnahme ausgelegt, die beispielsweise für die mechanische Einwirkung auf ein Produkt erforderlich ist. Die Leistungsaufnahme des Energieverbrauchers kann beispielsweise eine Untergrenze von10, 30, 50 oder 100 Watt aufweisen, und die Speichereinrichtung für Energie ist entsprechend ausgelegt, so dass ein zuverlässiger Betrieb des Aktors und/oder Sensors als Energieverbraucher sichergestellt ist. Dementsprechend kann zumindest eine Leistung von mehr als 10, 30, 50 oder 100 Watt mittels der Übertragungseinrichtung an den Läufer transferiert werden.

Da der Läufer mit der Empfangseinrichtung und mit der Speichereinrichtung für Energie ausgestattet ist, kann der Läufer an sich eine geeignete Energiemenge bereitstellen, damit der Energieverbraucher beispielsweise in der Form eines Aktors und/oder Sensors auf das Produkt oder Erzeugnis einwirken kann. Aufwändige externe Einrichtungen zur Einwirkung auf das Produkt oder Erzeugnis sind somit nicht mehr erforderlich. Daher benötigt eine Anlage, innerhalb derer sich das Linearmotorsystem befindet, eine verringerte Grundfläche im Vergleich zu Anlagen, die externe Einrichtungen zur Einwirkung auf das Produkt bzw. das Erzeugnis benötigen. Infolgedessen sinken die Kosten für die gesamte Anlage.

Ferner ist die Position, an der sich die Übertragungseinrichtung der Führungsbahn zum Bereitstellen der Energie für den Läufer befindet, nicht im Vorhinein festgelegt, so dass die Übertragungseinrichtung flexibel entlang der Führungsbahn angeordnet werden kann. Dabei kann sich die Übertragungseinrichtung in einer Richtung entlang der Führungsbahn entweder maximal über die Länge des Läufers in Richtung der Führungsbahn erstrecken, wenn die Energieübertragung im Stillstand des Läufers erfolgt, oder sie kann sich über einige wenige Längen des Läufers erstrecken, beispielsweise drei bis fünf Läuferlängen, wenn der Läufer während der Energieübertragung in Bewegung ist. In beiden Fällen ist die Länge, über die sich die Übertragungseinrichtung entlang der Führungsbahn erstreckt, jedoch erheblich kleiner als die Gesamtlänge der Führungsbahn. Dies gestattet eine flexible Konstruktion des Linearmotorsystems und der entsprechenden Anlage als Ganzes. Aufgrund der Energiespeichereinrichtung des Läufers ist die Übertragung der Energie von der Führungsbahn auf den Läufer außerdem zeitlich unabhängig von der Nutzung der Energie durch den Energieverbraucher. Darüber hinaus können die Zeitdauer für die Übertragung der Energie und die Größe der Energiespeichereinrichtung derart dimensioniert werden, dass eine ausreichende Energiemenge für die Aktivität des Energieverbrauchers zur Verfügung steht.

Der Antriebsmagnet kann auch mehrere einzelne Magneten, insbesondere Permanentmagneten, umfassen.

Die Führungsbahn kann durch mehrere Linearmotoren (d.h. Segmente) gebildet sein. Bevorzugt umfasst jeder Linearmotor mehrere der Elektromagneten, mittels welchen die Läufer bewegt werden.

Die Energiespeichereinrichtung des Läufers ist ferner zur Speicherung von elektrischer Ladung ausgebildet. Als Energiespeichereinrichtung können in diesem Fall beispielsweise Doppelschicht-Kondensatoren wie etwa Supercaps oder Ultracaps und alternativ Akkumulatoren wie beispielsweise Lithium-Ionen-Akkus verwendet werden. Solche Speichereinrichtungen für elektrische Ladung verfügen vorteilhafterweise über eine hohe Energiedichte, wodurch die Leistungsfähigkeit und die Anwendungsmöglichkeiten für den Energieverbraucher verbessert werden.

Der Läufer umfasst ferner eine elektronische Einrichtung, die zur Steuerung des Energieverbrauchers und zum Ermitteln eines Ladezustands der Energiespeichereinrichtung vorgesehen ist. Die Aktivierung des Energieverbrauchers und das Aufladen der Energiespeichereinrichtung können somit mittels der elektronischen Einrichtung mit der Bewegung des Läufers entlang der Führungsbahn abgestimmt werden. Beispielsweise kann die Bewegung des Läufers derart gesteuert werden, dass dieser mit der stationären Übertragungseinrichtung in Kontakt gelangt, sobald der Ladezustand der Energiespeichereinrichtung einen vorbestimmten Schwellenwert unterschreitet, um die Energiespeichereinrichtung rechtzeitig nachzuladen. Dadurch kann sichergestellt werden, dass die Energiespeichereinrichtung stets genügend Energie zur Aktivierung des Energieverbrauchers enthält.

Vorteilhafte Weiterbildungen der Erfindung sind in den Unteransprüchen, der Beschreibung und den Zeichnungen angegeben.

Gemäß einer Ausführungsform ist die Empfangseinrichtung ausgebildet, um die Energie von der Übertragungseinrichtung berührungslos zu empfangen. Die Übertragung der Energie auf den Läufer des Linearmotorsystems ist dadurch frei von Abnutzung, die beispielsweise bei einer mechanischen Energieübertragung mit direkter Kopplung oder bei einer elektrischen Energieübertragung mittels Schleifringen auftreten würde und dabei Staub sowie Schmutz erzeugen könnte. Die berührungslose Energieübertragung ist besonders vorteilhaft, wenn das Linearmotorsystem in einer aseptischen Umgebung eingesetzt werden soll.

Die Übertragungseinrichtung der Führungsbahn und die Empfangseinrichtung des Läufers können jeweils mindestens eine Spule aufweisen. Dabei kann die Spule der Übertragungseinrichtung mit der Spule der Empfangseinrichtung induktiv gekoppelt sein, wenn sich die Empfangseinrichtung bezogen auf die Übertragungseinrichtung innerhalb eines vorbestimmten Abstands befindet. Die mindestens eine Spule der Übertragungseinrichtung kann mehrere sich überlagernde Spulen oder eine langgezogene Spule entlang der Führungsbahn umfassen. Ferner ist insbesondere eine induktive Resonanzkopplung, bei der die jeweiligen Spulen auf die gleiche Frequenz abgestimmt sind, zwischen der Übertragungseinrichtung der Führungsbahn und der Empfangseinrichtung des Läufers vorgesehen. Mittels der induktiven Kopplung zweier Spulen und insbesondere deren induktiver Resonanzkopplung lässt sich die Energieübertragung auf den Läufer auf relativ einfache und platzsparende Weise erreichen.

Alternativ oder zusätzlich kann die Energieübertragung auch kapazitiv erfolgen. Hierzu können die Übertragungseinrichtung und die Empfangseinrichtung gemeinsam einen Kondensator umfassen und beispielsweise jeweils eine Platte eines Plattenkondensators aufweisen.

Die vorbestimmte Position der Übertragungseinrichtung kann ferner von Positionen entlang der Führungsbahn verschieden sein, an welchen eine Aktivierung des Energieverbrauchers vorgesehen ist. Die Energieübertragung auf den Läufer ist somit zeitlich und räumlich unabhängig von der Aktivierung des Energieverbrauchers. Beispielsweise können entlang der Führungsbahn mehrere Prozessstationen vorgesehen sein, an denen ein Aktor und/oder Sensor des Läufers jeweils auf unterschiedliche Art aktiviert werden, um in einer vorbestimmten Reihenfolge bestimmte Schritte auszuführen, die beispielsweise einem Herstellungsverfahren zugeordnet sind. Die zeitliche und räumliche Entkopplung der Energieübertragung von der Aktivierung des Energieverbrauchers ermöglicht ferner eine flexible Anordnung einer oder mehrerer stationärer Übertragungseinrichtungen entlang der Führungsbahn, beispielsweise zwischen den jeweiligen Prozessstationen.

Gemäß einer weiteren Ausführungsform ist der Läufer ausgebildet, um drahtlos Informationen zu senden und zu empfangen. Diese Informationen betreffen insbesondere die Steuerung des Energieverbrauchers und/oder einen Ladezustand der Energiespeichereinrichtung. Der Läufer kann somit mit der Steuerungseinrichtung des Linearmotorsystems signaltechnisch gekoppelt sein, so dass die Bewegung des Läufers mit dessen interner Steuerung abgestimmt werden kann, d.h. beispielsweise mit der Aktivierung des Energieverbrauchers und dem Erfassen des Ladezustands der Energiespeichereinrichtung.

Die Empfangseinrichtung des Läufers und die Übertragungseinrichtung der Führungsbahn können dabei zusätzlich zum Senden und Empfangen der Informationen ausgebildet sein. Somit können die Empfangseinrichtung und die Übertragungseinrichtung eine doppelte Funktionalität aufweisen, und zwar zur Energieübertragung und zur Kommunikation zwischen dem Läufer und beispielsweise der Steuerungseinrichtung des Linearmotorsystems. Für die Kommunikation sind bei dieser Ausführungsform folglich keine weiteren Einrichtungen erforderlich, wobei die Kommunikation zwischen der Empfangseinrichtung des Läufers und der Übertragungseinrichtung der Führungsbahn auf den Bereich der stationären Position der Übertragungseinrichtung begrenzt sein kann.

Alternativ kann der Läufer eine separate Kommunikationseinrichtung aufweisen, die mit der Steuerungseinrichtung des Linearmotorsystems in direktem Drahtloskontakt steht. Dabei kann eine bekannte, kostengünstige Drahtlostechnologie verwendet werden, beispielsweise Bluetooth, WiFi usw. Die Kommunikation zwischen dem Läufer und beispielsweise der Steuerungseinrichtung des Linearmotorsystems ist bei dieser Alternative nicht auf einen bestimmten Raumbereich begrenzt, sondern kann entlang der gesamten Führungsbahn des Linearmotorsystems erfolgen.

Gemäß einer weiteren Ausführungsform kann der Läufer ausgebildet sein (oder von den Elektromagneten der Führungsbahn entsprechend angesteuert bzw. bewegt werden), um für eine jeweilige vorbestimmte Zeitdauer i) zur Energieübertragung an der Position der Übertragungseinrichtung und/oder ii) an einer vorbestimmten Aktivierungsposition des Energieverbrauchers anzuhalten. Alternativ kann der Läufer jedoch auch während der Energieübertragung und/oder während einer Aktivierung des Energieverbrauchers in Bewegung sein. Während der Energieübertragung ist die Geschwindigkeit des Läufers dabei jedoch vorzugsweise gering (d.h. unterhalb einer Schwellengeschwindigkeit, welche unterhalb einer üblichen Bewegungsgeschwindigkeit des Läufers liegt), so dass der Läufer die Übertragungseinrichtung zur Energieübertragung sehr langsam durchfährt.

Wenn der Läufer zur Energieübertragung anhält, kann die vorbestimmte Zeitdauer variabel von dem Ladezustand der Energiespeichereinrichtung abhängen, wenn der Ladezustand der Energiespeichereinrichtung erfasst wird. Mittels der jeweiligen vorbestimmten Zeitdauern für das jeweilige Anhalten des Läufers bzw. mittels der Geschwindigkeit bei der Energieübertragung bzw. der Aktivierung des Energieverbrauchers, wenn der Läufer währenddessen in Bewegung bleibt, können somit die Energieübertragung auf den Läufer und die Aktivierung des Energieverbrauchers miteinander abgestimmt werden.

Weiterer Gegenstand der Erfindung ist ein Verfahren zum Betreiben eines Linearmotorsystems, wie es beispielsweise vorstehend beschrieben ist. Das Linearmotorsystem weist neben einem Läufer eine Führungsbahn mit einer Vielzahl von entlang der Führungsbahn verteilt angeordneten Elektromagneten auf, die mit einem Antriebsmagneten des Läufers zusammenwirken, um den Läufer entlang der Führungsbahn zu bewegen. Der Läufer ist mit einem Energieverbraucher und einer Energiespeichereinrichtung zur Energieversorgung des Energieverbrauchers ausgestattet. Entlang der Führungsbahn sind ferner mindestens eine Prozessstation, an welcher der Energieverbraucher des Läufers aktiviert wird, und mindestens eine Übertragungseinrichtung zur Übertragung von Energie auf den Läufer vorgesehen.

Das Verfahren umfasst eine Kalibrierungsphase und eine Betriebsphase des Linearmotorsystems. Während der Kalibrierungsphase wird eine Energiemenge ermittelt, die für eine Aktivierung des Energieverbrauchers an der Prozessstation erforderlich ist. In der Betriebsphase hingegen wird die während der Kalibrierungsphase ermittelte Energiemenge mittels der Übertragungseinrichtung auf den Läufer übertragen, bevor der Energieverbraucher des Läufers an der Prozessstation aktiviert wird.

Somit dient das Verfahren insgesamt zur Übertragung von Energie auf den Läufer. Die Übertragung der Energie auf den Läufer mittels der Übertragungseinrichtung wird bezüglich der erforderlichen Energiemenge mit der Aktivierung des Energieverbrauchers an der Prozessstation abgestimmt. Dabei kann die erforderliche Energiemenge, die während der Kalibrierungsphase ermittelt wird, größer sein als die tatsächlich vom Energieverbraucher während dessen Aktivierung verbrauchte Energiemenge, um die Aktivierung des Energieverbrauchers abzusichern. Mit anderen Worten umfasst die erforderliche Energiemenge eine Sicherheitsreserve.

Aufgrund der Abstimmung der Energieübertragung mit der Aktivierung des Energieverbrauchers lässt sich der Prozessablauf entlang der Führungsbahn optimieren, da einerseits eine ausreichende Energiemenge für die Aktivierung des Energieverbrauchers an der Prozessstation bereitgestellt wird und andererseits keine unnötig große Energiemenge übertragen wird, die entsprechend eine unnötig lange Zeitdauer zur Energieübertragung benötigen würde.

Ferner ist die Energiespeichereinrichtung des Läufers zur Speicherung von elektrischer Ladung ausgebildet, und gemäß dem Verfahren wird zunächst ein erster Ladezustand der Energiespeichereinrichtung ermittelt, bevor der Energieverbraucher des Läufers an der Prozessstation aktiviert wird. Nach der Aktivierung des Energieverbrauchers an der Prozessstation wird ein zweiter Ladezustand der Energiespeichereinrichtung ermittelt, und die Energiemenge, die zur Aktivierung des Verbrauchers erforderlich ist, wird anschließend anhand einer Differenz des ersten Ladezustands und des zweiten Ladezustands der Energiespeichereinrichtung ermittelt.

Wenn die Energiespeichereinrichtung beispielsweise mittels Kondensatoren gebildet ist, kann der Ladezustand durch eine einfache Spannungsmessung ermittelt werden. Die vorliegende Ausführungsform mit Ermittlung zweier Ladezustände gestattet somit eine einfache und kostengünstige Ausführung des Verfahrens.

Gemäß einer weiteren Ausführungsform des Verfahrens kann zusätzlich in der Betriebsphase des Linearmotorsystems ein dritter Ladezustand der Energiespeichereinrichtung ermittelt werden, bevor der Energieverbraucher an der Prozessstation aktiviert wird, und ein vierter Ladezustand der Energiespeicherung nach der Aktivierung des Energieverbrauchers an der Prozessstation ermittelt werden.

Anhand einer Differenz des dritten und vierten Ladezustands kann ferner eine Korrektur-Energiemenge zur Aktivierung des Energieverbrauchers ermittelt werden, und zwischen dieser Korrektur-Energiemenge und der in der Kalibrierungsphase ermittelten Energiemenge kann eine Abweichung ermittelt werden. Wenn die Abweichung einen vorbestimmten Schwellenwert überschreitet, kann die in der Kalibrierungsphase ermittelte Energiemenge mit der Korrektur-Energiemenge aktualisiert werden.

Während der Betriebsphase des Linearmotorsystems kann somit eine Aktualisierung der erforderlichen Energiemenge zur Aktivierung des Energieverbrauchers anhand der Differenz zweier Ladezustände vor und nach der Aktivierung erfolgen. Ferner kann die erforderliche Energiemenge, die während der Kalibrierungsphase ermittelt wird, während der Betriebsphase überprüft werden. Außerdem gestatten die zusätzlichen Verfahrensschritte während der Betriebsphase eine Anpassung des Linearmotorsystems an eine Änderung von Parametern des Energieverbrauchers und/oder an eine Änderung eines Produkts oder Erzeugnisses, auf das der Energieverbraucher einwirken soll und das mittels des Linearmotorsystems transportiert wird.

Nachfolgend wird die Erfindung beispielhaft anhand einer vorteilhaften Ausführungsform unter Bezugnahme auf die beigefügten Figuren beschrieben. Es zeigen, jeweils schematisch:
- Fig. 1: ein als Transportsystem ausgebildetes Linearmotorsystem,
- Fig. 2: einen Kurvenabschnitt des Linearmotorsystems von Fig. 1,
- Fig. 3: eine perspektivische Schnittansicht des Linearmotorsystems von Fig. 1 mit Schnittebene senkrecht zur Führungsbahn,
- Fig. 4: eine Darstellung eines Linearmotorsystems mit Übertragungseinrichtung und Empfangseinrichtung und
- Fig. 5: eine Detailansicht einer Einrichtung zur Übertragung von Energie auf einen Läufer des Linearmotorsystems von Fig. 4.

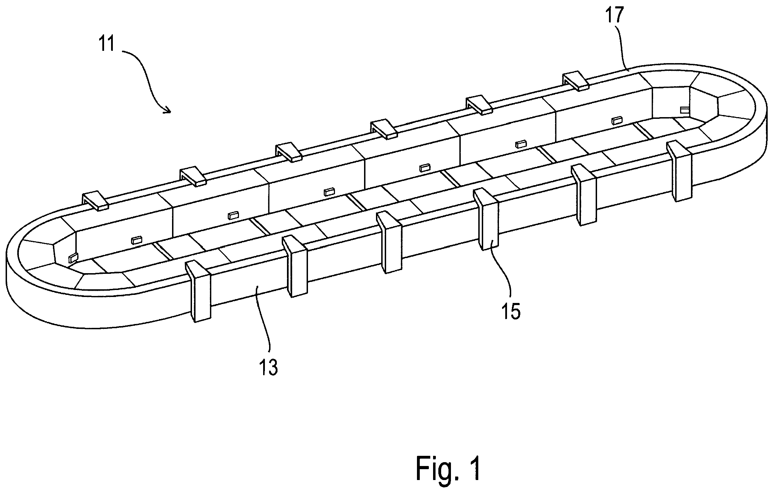

Ein Linearmotorsystem 11, das als Multi-Carrier-System ausgebildet ist, ist in Fig. 1 dargestellt. Das Linearmotorsystem 11 umfasst mehrere Linearmotoren 13, die aneinandergereiht angeordnet sind, so dass eine durchgehende und in diesem Fall umlaufende Bewegung der Läufer 15 entlang einer Führungsbahn 17 ermöglicht ist. Ferner umfasst das Transportsystem 11 mehrere Läufer 15, die einzelne Transportelemente des Transportsystems 11 bilden und die mittels der Linearmotoren 13 entlang der Führungsbahn 17 unabhängig voneinander bewegt werden können.

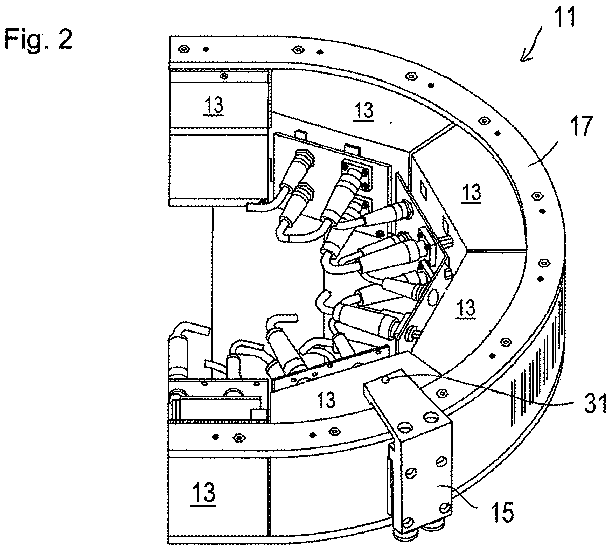

Fig. 2 zeigt einen Kurvenabschnitt des Linearmotorsystems 11 in vergrößerter Ansicht. Hier ist lediglich ein Läufer 15 dargestellt, der mittels der Linearmotoren 13 entlang der Führungsbahn 17 bewegbar ist. Auf der dem Läufer 15 abgewandten Seite der Führungsbahn 17, d.h. innerhalb des Kurvenabschnitts, sind verschiedene elektronische Einrichtungen zur Ansteuerung der Linearmotoren 13 sichtbar.

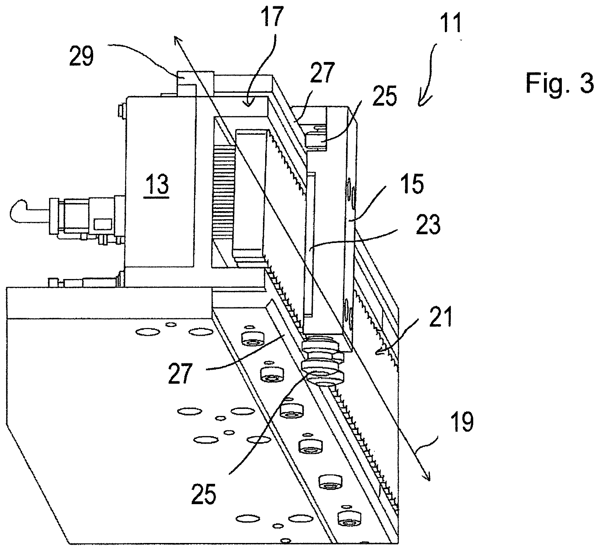

In Fig. 3 ist das Linearmotorsystem 11 in einer Schnittansicht und vergrößert dargestellt. Es ist ein Läufer 15 sichtbar, der an der Führungsbahn 17 beweglich geführt ist. Dabei ist der Läufer 15 entlang einer Führungsachse 19 oder Bewegungsachse bewegbar. Zu einer Bewegung entlang der Führungsachse 19 wird der Läufer 15 durch eine Vielzahl von Elektromagneten 21 angesteuert, die an der Führungsbahn 17 angeordnet und entlang dieser gleichmäßig verteilt sind. Die Elektromagnete 21 wirken dabei mit einem am Läufer 15 angeordneten Permanentmagneten 23, der auch als Antriebsmagnet bezeichnet werden kann, zum Antrieb des Läufers zusammen.

Der Läufer 15 ist an der Führungsbahn 17 mechanisch geführt, und zwar durch eine Rollenführung. Diese umfasst Führungsrollen 25 am Läufer 15 und Führungsschienen 27 an der Führungsbahn 17. Der Läufer 15 wird dabei insbesondere über den Permanentmagneten 23 an der Führungsbahn 17 gehalten.

Das Linearmotorsystem 11 umfasst außerdem eine Positionserfassungseinrichtung 29. Diese kann beispielsweise als Reihe von einer Vielzahl von Magnetsensoren ausgebildet sein, die sich entlang der Führungsbahn 17 erstreckt. Am Läufer 15 kann zum Beispiel ein Permanentmagnet 31 vorgesehen sein, der auch als Positionsmagnet bezeichnet werden kann und in Fig. 2 sichtbar ist.

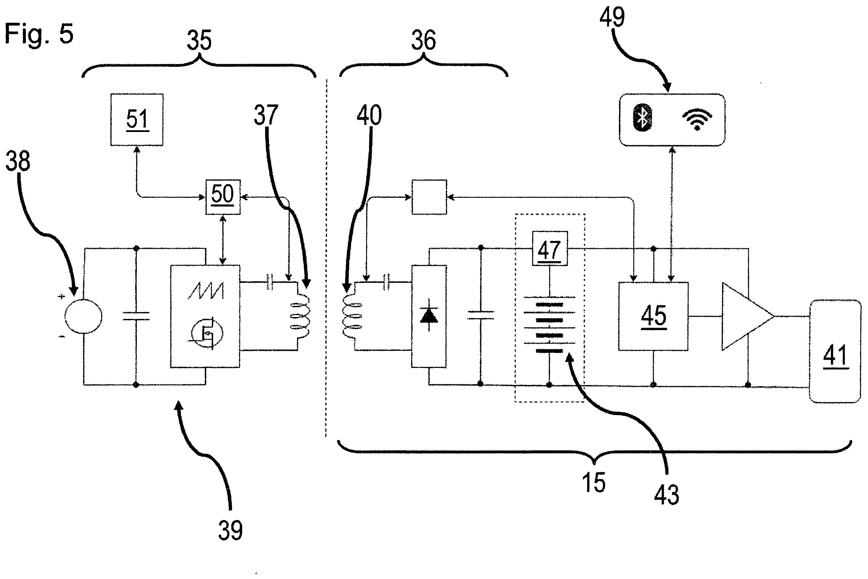

Das Linearmotorsystem 11 umfasst außerdem eine Kommunikationsschnittstelle 50 (siehe Fig. 5), die mit einer Steuerungseinrichtung 51 gekoppelt ist, von welcher ein Element in Fig. 5 dargestellt ist und welche dazu eingerichtet ist, die Elektromagneten 21 gezielt anzusteuern, um den Läufer 15 entlang der Führungsbahn 17 bzw. der Führungsachse 19 zu bewegen. Die Positionserfassungseinrichtung 29 führt dabei eine Positionsinformation betreffend die Position des Läufers 15 in Bezug auf die Führungsachse 19 zurück zur Steuerungseinrichtung 51. Die Steuerungseinrichtung 51 regelt die Bewegung des Läufers 15 auf Basis der Positionsinformation.

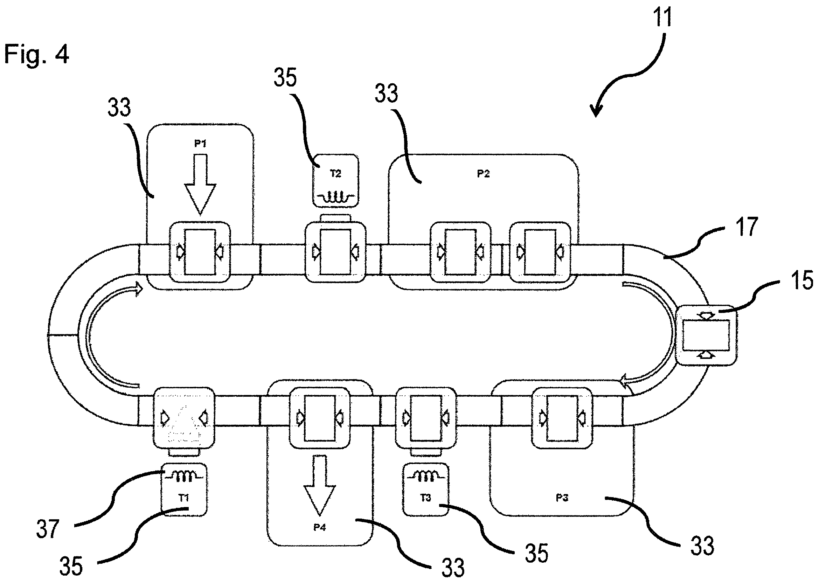

Fig. 4 zeigt eine schematische Darstellung eines erfindungsgemäßen Linearmotorsystems 11, das ebenso wie das Linearmotorsystems 11 von Fig. 1 bis 3 als Multi-Carrier-System ausgebildet ist und sämtliche Elemente umfasst, die in Fig. 1 bis 3 dargestellt und vorstehend beschrieben sind. Das Linearmotorsystem 11 weist somit eine Vielzahl von Läufern 15 auf, die sich entlang der geschlossenen Führungsbahn 17 im Uhrzeigersinn bewegen, wie dies durch die Pfeile angedeutet ist.

Entlang der Führungsbahn 17 sind insgesamt vier Prozessstationen 33 (vgl. Fig. 4) angeordnet, die nacheinander von den Läufern 15 durchlaufen werden und mit P1, P2, P3 und P4 bezeichnet sind. Bei der ersten Prozessstation 33 bzw. P1 wird dem Läufer 15 Material zum Herstellen eines Behälters zugeführt, und der Behälter wird anschließend mittels eines Aktors 41 (vgl. Fig. 5) des Läufers 15 hergestellt, beispielsweise durch Falten einer Kartonage. Bei der zweiten Prozessstation 33 bzw. P2 wird der Behälter mit einem Produkt oder Erzeugnis gefüllt, während der Behälter bei der dritten Prozessstation 33 bzw. P3 geschlossen wird und bei der vierten Prozessstation 33 bzw. P4 das Linearmotorsystem 11 verlässt.

Zwischen den Prozessstationen 33 sind insgesamt drei Übertragungseinrichtungen 35 entlang der Führungsbahn 17 angeordnet, die zur Übertragung von Energie auf den Läufer 15 vorgesehen sind. Im vorliegenden Ausführungsbeispiel befindet sich jeweils eine Übertragungseinrichtung 35 zwischen der ersten und zweiten Prozessstation 33 bzw. zwischen P1 und P2, zwischen der dritten und vierten Prozessstation 33 bzw. zwischen P3 und P4 sowie zwischen der vierten und ersten Prozessstation 33 bzw. zwischen P4 und P1. Zur Energieübertragung auf den Läufer umfassen die Übertragungseinrichtungen 35 jeweils mindestens eine Spule 37, um eine induktive Kopplung zwischen der Übertragungseinrichtung 35 und dem Läufer 15 herzustellen, wie nachstehend näher erläutert ist.

Es versteht sich, dass mit einem solchen Linearmotorsystem 11 nahezu beliebige Konstellationen von Segmenten aus Linearmotoren 13, Läufern 15, Prozessstationen 33 und Übertragungseinrichtungen 35 realisierbar sind.

Fig. 5 zeigt eine Detailansicht eines Ausschnitts des Linearmotorsystems 11 von Fig. 4, bei dem sich ein Läufer 15 in unmittelbarer Nähe einer der Übertragungseinrichtungen 35 befindet. Die Übertragungseinrichtung 35 weist die Spule 37 auf, die bereits in Fig. 4 gezeigt ist und letztlich zur Übertragung von Energie auf den Läufer 15 dient. Die Übertragungseinrichtung 35 weist ferner eine Leistungs- bzw. Stromquelle 38 auf, die mit einem Oszillator 39 in Verbindung steht, der wiederum die Spule 37 mit einer Wechselspannung versorgt. Ferner ist in Fig. 5 ein Element der Steuerungseinrichtung 51 gezeigt, die generell zur Steuerung der Bewegung des Läufers 15 entlang der Führungsbahn 17 vorgesehen ist und deren hier gezeigtes Element die Übertragung von Energie auf den Läufer 15 mittels der Spule 37 steuert.

Der Läufer 15 weist ebenso wie die Übertragungseinrichtung 35 eine Spule 40 auf, die zu einer Empfangseinrichtung 36 des Läufers 15 gehört. Mittels der Empfangseinrichtung 36 ist der Läufer 15 in der Lage, über die Spule 40 Energie von der Übertragungseinrichtung 35 aufzunehmen. Die Spule 40 steht zu diesem Zweck mit der Spule 37 der Übertragungseinrichtung 35 in Resonanzkopplung, bei welcher die beiden Spulen 37, 40 auf die gleiche Frequenz abgestimmt sind. In der Praxis lässt sich ein hoher Kopplungsfaktor von etwa 0,5 bis 0,8, z.B. 0,54 bei einem Abstand von 3 bis 6 mm zwischen den Spulen 37, 40 erreichen. Die Energie, die durch die Spule 40 des Läufers 15 aufgenommen wird, dient letztlich zur Versorgung eines Energieverbrauchers 41, der im vorliegenden Beispiel als Aktor ausgebildet ist. Der Aktor 41 wirkt im Betrieb des Linearmotorsystems 11 an den Prozessstationen 33 (vgl. Fig. 4) auf einen oder mehrere Gegenstände ein, die mittels des Läufers 15 entlang der Führungsbahn 17 des Linearmotorsystems 11 transportiert werden.

Die Energie, die durch die Spule 40 aufgenommen wird und von dem Aktor 41 an den Prozessstationen 33 (vgl. Fig. 4) verbraucht werden soll, wird im Läufer 15 in einer Energiespeichereinrichtung 43 gespeichert. Die Energiespeichereinrichtung 43 umfasst Doppelschicht-Kondensatoren wie beispielsweise Supercaps oder Ultracaps, die eine hohe Energiedichte aufweisen und mittels der Spule 40 geladen werden, wenn sich der Läufer 15 in der Nähe der Übertragungseinrichtung 35 befindet.

Der Läufer 15 weist ferner eine elektronische Einrichtung 45 in der Form eines Prozessors auf, der einerseits zur Steuerung des Aktors 41 dient. Darüber hinaus steht der Prozessor 45 mit einer Einrichtung 47 zum Erfassen des Ladezustands der Energiespeichereinrichtung 43 in Verbindung.

Zusätzlich weist der Läufer 15 eine Kommunikationseinrichtung 49 auf, mit welcher der Läufer 15 beispielsweise mittels Bluetooth, WiFi usw. mit der Steuerungseinrichtung 51 des Linearmotorsystems 11 in einer Kommunikationsverbindung steht. Über diese Kommunikationsverbindung ist es möglich, den Aktor 41 mittels der Steuerungseinrichtung des Linearmotorsystems 11 an einer beliebigen Position des Läufers 15 entlang der Führungsbahn 17 anzusteuern. Darüber hinaus kann zusätzlich die induktive Kopplung zwischen den beiden Spulen 37, 40 zur Übertragung von Informationen genutzt werden, beispielsweise zur Übertragung des Ladezustands der Energiespeichereinrichtung 43, während diese an der Übertragungseinrichtung 35 aufgeladen wird.

Während des Betriebs des Linearmotorsystems 11 kann ein jeweiliger Läufer 15 jeweils für eine vorbestimmte Zeitdauer an einer der Übertragungsstationen 35 anhalten (vgl. Fig. 4), bis die Energiespeichereinrichtung 43 dieses Läufers 15 einen vorbestimmten Ladezustand erreicht hat. Alternativ ist es jedoch auch möglich, dass ein jeweiliger Läufer 15 den Bereich der jeweiligen Übertragungsstation 35 mit einer geringen Geschwindigkeit durchläuft, während die Energiespeichereinrichtung 43 aufgeladen wird. In diesem Fall ist es zweckmäßig, dass die Spule 37 der Übertragungseinrichtung 35 länglich entlang der Führungsbahn 17 ausgebildet ist oder aus mehreren, sich überlagernden Spulen besteht.

Um die Energiemenge zu ermitteln, die ein jeweiliger Aktor 41 eines Läufers 15 an einer jeweiligen Prozessstation 33 benötigt (vgl. Fig. 4), ist eine Kalibrierungsphase des Linearmotorsystems 11 vor dessen eigentlicher Betriebsphase vorgesehen. Während der Kalibrierungsphase wird zunächst ein erster Ladezustand der Energiespeichereinrichtung 43 eines der Läufer 15 erfasst, bevor der Läufer 15 die jeweilige Prozessstation 33 bzw. P1, P2, P3 oder P4 erreicht. Nach der Aktivierung des Aktors 41 an der jeweiligen Prozessstation 33 wird ein zweiter Ladezustand der Energiespeichereinrichtung 43 erfasst. Anhand der Differenz des ersten und zweiten Ladezustands wird die Energiemenge ermittelt, die zur Aktivierung bzw. Betätigung des Aktors 41 an der jeweiligen Prozessstation 33 erforderlich ist. In der anschließenden Betriebsphase des Linearmotorsystems 11 wird die Energiespeichereinrichtung 43 des Läufers 15 an einer der Übertragungseinrichtungen 35 vor der jeweiligen Prozessstation 33 mit einer Ladung aufgeladen, die der Energiemenge entspricht, die zuvor während der Kalibrierungsphase für diese Prozessstation 33 ermittelt wurde.

Darüber hinaus kann die Energiemenge, die für die jeweilige Prozessstation 33 während der Kalibrierungsphase ermittelt wird, während der Betriebsphase des Linearmotorsystems 11 überprüft bzw. angepasst werden. Zu diesem Zweck wird wiederum ein Paar von Ladezuständen der Energiespeichereinrichtung 43 des jeweiligen Läufers 15 ermittelt, und zwar wiederum jeweils vor und nach der Aktivierung bzw. Betätigung des Aktors 41 an der jeweiligen Prozessstation 33. Die Differenz dieser beiden Ladezustände wird mit der Differenz der entsprechenden Ladezustände aus der Kalibrierungsphase verglichen, um gegebenenfalls die Energiemenge anzupassen, welche die Energiespeichereinrichtung 43 des Läufers 15 an den jeweiligen Übertragungseinrichtungen 35 aufnehmen soll. Dadurch ist es möglich, die für die Betätigung des Aktors 41 erforderliche Energiemenge und die entsprechende aufzunehmende Ladung anzupassen, wenn die Betätigung des Aktors 41 an einer jeweiligen Prozessstation 33 verändert wird oder die Art der Produkte oder Erzeugnisse verändert wird, die mittels des Linearmotorsystems 11 transportiert werden und auf welche der Aktor 41 einwirken soll.

### Bezugszeichenliste

- 11: Linearmotorsystem
- 13: Linearmotor
- 15: Läufer
- 17: Führungsbahn
- 19: Führungsachse
- 21: Elektromagneten
- 23: Antriebsmagnet
- 25: Führungsrollen
- 27: Führungsbahn
- 29: Positionserfassungseinrichtung
- 31: Positionsmagnet
- 33: Prozessstation
- 35: Übertragungseinrichtung
- 36: Empfangseinrichtung
- 37: Spule der Übertragungseinrichtung
- 38: Leistungsquelle
- 39: Oszillator
- 40: Spule des Läufers
- 41: Energieverbraucher, Aktor und/oder Sensor
- 43: Energiespeichereinrichtung
- 45: Elektronische Einrichtung, Prozessor
- 47: Einrichtung zum Erfassen des Ladezustands
- 49: Kommunikationseinrichtung
- 50: Kommunikationsschnittstelle
- 51: Steuerungseinrichtung

## Patentansprüche

1. Linearmotorsystem (11), insbesondere Transportsystem, beispielsweise Multi-Carrier-System, umfassend:
eine Führungsbahn (17) mit einer Vielzahl von entlang der Führungsbahn (17) verteilt angeordneten Elektromagneten (21),
wenigstens einen Läufer (15), der von der Führungsbahn (17) geführt und entlang dieser bewegbar ist und einen Antriebsmagneten (23) zum Zusammenwirken mit den Elektromagneten (21) der Führungsbahn (17) zum Bewegen des Läufers (15) umfasst; und
eine Steuerungseinrichtung (51) zur Steuerung der Bewegung des Läufers (15) relativ zur Führungsbahn (17) durch entsprechende Ansteuerung der Elektromagneten (21),
wobei
der Läufer (15) einen Energieverbraucher (41) aufweist,
die Führungsbahn (17) mindestens eine Prozessstation, an welcher der Energieverbraucher des Läufers aktiviert wird, und mindestens eine stationäre Übertragungseinrichtung (35) aufweist, die zum Bereitstellen von Energie vorgesehen ist und sich an einer vorbestimmten Position befindet,
der Läufer (15) eine Empfangseinrichtung (36) aufweist, die ausgebildet ist, um Energie von der Übertragungseinrichtung (35) der Führungsbahn (17) zu empfangen, und
der Läufer (15) eine Energiespeichereinrichtung (43) aufweist, die mit der Empfangseinrichtung (36) und mit dem Energieverbraucher (41) verbunden und ausgebildet ist, um den Energieverbraucher (41) während dessen Betrieb mit Energie zu versorgen,
wobei die Energiespeichereinrichtung (43) des Läufers (15) zur Speicherung von elektrischer Ladung ausgebildet ist und
der Läufer (15) ferner eine elektronische Einrichtung (45) umfasst, die zur Steuerung des Energieverbrauchers (41) vorgesehen ist, **dadurch gekennzeichnet, dass**
die elektronische Einrichtung (45) im Form eines Prozessors mit einer Einrichtung (47) zum Erfassen eines Ladezustands der Energiespeichereinrichtung (43) in Verbindung steht, die in einer Kalibrierungsphase des Linearmotorsystems (11) einen ersten Ladezustand der Energiespeichereinrichtung (43) vor einer Aktivierung des Energieverbrauchers (41) des Läufers (15) an der Prozessstation (33) ermittelt und einen zweiten Ladezustand der Energiespeichereinrichtung (43) nach der Aktivierung des Energieverbrauchers (41) an der Prozessstation (33) ermittelt, und
die Übertragungseinrichtung (35) in einer Betriebsphase des Linearmotorsystems (11) eine Energiemenge, welche zur Aktivierung des Energieverbrauchers (41) erforderlich ist und welche anhand einer Differenz des ersten Ladezustands und des zweiten Ladezustands der Energiespeichereinrichtung (43) ermittelt wurde, auf den Läufer (15) überträgt, bevor der Energieverbraucher des Läufers an der Prozessstation aktiviert wird.

2. Linearmotorsystem (11) nach Anspruch 1,
wobei die Empfangseinrichtung (36) ausgebildet ist, um die Energie von der Übertragungseinrichtung (35) berührungslos zu empfangen.

3. Linearmotorsystem (11) nach Anspruch 1 oder 2,
wobei die Übertragungseinrichtung (35) der Führungsbahn (17) und die Empfangseinrichtung (36) des Läufers (15) jeweils mindestens eine Spule (37, 40) aufweisen und die mindestens eine Spule (37) der Übertragungseinrichtung (35) mit der mindestens eine Spule (40) der Empfangseinrichtung (36) induktiv gekoppelt ist, wenn sich die Empfangseinrichtung (36) bezogen auf die Übertragungseinrichtung (35) innerhalb eines vorbestimmten Abstands befindet.

4. Linearmotorsystem (11) nach Anspruch 3,
wobei eine induktive Resonanzkopplung, bei der die jeweiligen Spulen (37, 40) auf die gleiche Frequenz abgestimmt sind, zwischen der Übertragungseinrichtung (35) der Führungsbahn (17) und der Empfangseinrichtung (36) des Läufers (15) vorgesehen ist.

5. Linearmotorsystem (11) nach einem der vorstehenden Ansprüche,
wobei die vorbestimmte Position der Übertragungseinrichtung (35) von Positionen entlang der Führungsbahn (17), an welchen eine Aktivierung des Energieverbrauchers (41) vorgesehen ist, verschieden ist.

6. Linearmotorsystem (11) nach einem der vorstehenden Ansprüche,
wobei der Läufer (15) ausgebildet ist, um drahtlos Informationen zu senden und zu empfangen, welche insbesondere die Steuerung des Energieverbrauchers (41) und/oder einen Ladezustand der Energiespeichereinrichtung (43) betreffen.

7. Linearmotorsystem (11) nach Anspruch 6,
wobei die Empfangseinrichtung (36) des Läufers (15) und die Übertragungseinrichtung (35) der Führungsbahn (17) zusätzlich zum Senden und Empfangen der Informationen ausgebildet sind.

8. Linearmotorsystem (11) nach Anspruch 6 oder 7,
wobei der Läufer (15) ferner eine zusätzliche Kommunikationseinrichtung (49) aufweist, die mit der Steuerungseinrichtung (51) des Linearmotorsystems (11) in direktem Drahtloskontakt steht.

9. Linearmotorsystem (11) nach einem der vorstehenden Ansprüche,
wobei der Läufer (15) ausgebildet ist, um für eine jeweilige vorbestimmte Zeitdauer zur Energieübertragung an der Position der Übertragungseinrichtung (35) und/oder an einer vorbestimmten Aktivierungsposition des Energieverbrauchers (41) anzuhalten.

10. Linearmotorsystem (11) nach einem der Ansprüche 1 bis 8,
wobei der Läufer (15) während der Energieübertragung und/oder während einer Aktivierung des Energieverbrauchers (41) in Bewegung ist.

11. Verfahren zum Betreiben eines Linearmotorsystems (11), welches einen Läufer (15) und eine Führungsbahn (17) mit einer Vielzahl von entlang der Führungsbahn (17) verteilt angeordneten Elektromagneten (21) aufweist, die mit einem Antriebsmagneten (23) des Läufers (15) zusammenwirken, um den Läufer (15) entlang der Führungsbahn (17) zu bewegen,
wobei
der Läufer (15) mit einem Energieverbraucher (41) und einer Energiespeichereinrichtung (43) zur Energieversorgung des Energieverbrauchers (41) ausgestattet ist und
entlang der Führungsbahn (17) mindestens eine Prozessstation (33), an welcher der Energieverbraucher (41) des Läufers (15) aktiviert wird, und mindestens eine Übertragungseinrichtung (35) zur Übertragung von Energie auf den Läufer (15) vorgesehen sind,
wobei das Verfahren umfasst, dass:
in einer Kalibrierungsphase des Linearmotorsystems (11) eine Energiemenge ermittelt wird, die für eine Aktivierung des Energieverbrauchers (41) an der Prozessstation (33) erforderlich ist,
die in der Kalibrierungsphase ermittelte Energiemenge in einer Betriebsphase des Linearmotorsystems (11) mittels der Übertragungseinrichtung (35) auf den Läufer (15) übertragen wird, bevor der Energieverbraucher (41) des Läufers (15) an der Prozessstation (33) aktiviert wird, **dadurch gekennzeichnet, dass**
die Energiespeichereinrichtung (43) des Läufers (15) zur Speicherung von elektrischer Ladung ausgebildet ist und
das Verfahren ferner umfasst, dass in der Kalibrierungsphase des Linearmotorsystems (11):
ein erster Ladezustand der Energiespeichereinrichtung (43) ermittelt wird, bevor der Energieverbraucher (41) des Läufers (15) an der Prozessstation (33) aktiviert wird,
ein zweiter Ladezustand der Energiespeichereinrichtung (43) nach der Aktivierung des Energieverbrauchers (41) an der Prozessstation (33) ermittelt wird und
die Energiemenge, die zur Aktivierung des Energieverbrauchers (41) erforderlich ist, anhand einer Differenz des ersten Ladezustands und des zweiten Ladezustands der Energiespeichereinrichtung (43) ermittelt wird.

12. Verfahren nach Anspruch 11,
wobei das Verfahren ferner umfasst, dass in der Betriebsphase des Linearmotorsystems (11):
ein dritter Ladezustand der Energiespeichereinrichtung (43) ermittelt wird, bevor der Energieverbrauchers (41) an der Prozessstation (33) aktiviert wird,
ein vierter Ladezustand der Energiespeichereinrichtung (43) nach der Aktivierung des Energieverbrauchers (41) an der Prozessstation (33) ermittelt wird,
eine Korrektur-Energiemenge zur Aktivierung des Energieverbrauchers (41) anhand einer Differenz des dritten Ladezustands und des vierten Ladezustands der Energiespeichereinrichtung (43) ermittelt wird,
eine Abweichung zwischen der in der Kalibrierungsphase ermittelten Energiemenge und der Korrektur-Energiemenge ermittelt wird und
die in der Kalibrierungsphase ermittelte Energiemenge mit der Korrektur-Energiemenge aktualisiert wird, wenn die Abweichung einen vorbestimmten Schwellenwert überschreitet.

## Claims

1. A linear motor system (11), in particular a transport system, for example a multi-carrier system, comprising:
a guide track (17) having a plurality of electromagnets (21) arranged distributed along the guide track (17);
at least one carrier (15) which is guided by and movable along the guide track (17) and which comprises a drive magnet (23) for cooperating with the electromagnets (21) of the guide track (17) to move the carrier (15); and
a control device (51) for controlling the movement of the carrier (15) relative to the guide track (17) by a corresponding control of the electromagnets (21),
wherein
the carrier (15) has an energy consumer (41),
the guide track (17) has at least one processing station, at which the energy consumer of the carrier is activated, and at least one stationary transmission device (35) which is provided for supplying energy and which is located at a predetermined position,
the carrier (15) has a reception device (36) which is configured to receive energy from the transmission device (35) of the guide track (17), and
the carrier (15) has an energy storage device (43) which is connected to the reception device (36) and to the energy consumer (41) and which is configured to supply the energy consumer (41) with energy during its operation,
wherein the energy storage device (43) of the carrier (15) is configured to store electric charge, and
the carrier (15) further comprises an electronic device (45) which is provided for controlling the energy consumer (41),
**characterized in that**
the electronic device (45) in the form of a processor is in communication with a device (47) for determining a charge state of the energy storage device (43) that determines a first charge state of the energy storage device (43) in a calibration phase of the linear motor system (11) before an activation of the energy consumer (41) of the carrier (15) at the process station (33) and determines a second charge state of the energy storage device (43) after the activation of the energy consumer (41) at the process station (33), and
the transmission device (35), in an operating phase of the linear motor system (11), transmits an energy amount, which is required for an activation of the energy consumer (41) and which was determined based on a difference of the first charge state and the second charge state of the energy storage device (43), to the carrier (15) before the energy consumer of the carrier is activated at the process station.

2. A linear motor system (11) according to claim 1,
wherein the reception device (36) is configured to contactlessly receive the energy from the transmission device (35).

3. A linear motor system (11) according to claim 1 or claim 2,
wherein the transmission device (35) of the guide track (17) and the reception device (36) of the carrier (15) each have at least one coil (37, 40) and the at least one coil (37) of the transmission device (35) is inductively coupled to the at least one coil (40) of the reception device (36) when the reception device (36) is located within a predetermined spacing with respect to the transmission device (35).

4. A linear motor system (11) according to claim 3,
wherein an inductive resonant coupling, in which the respective coils (37, 40) are tuned to the same frequency, is provided between the transmission device (35) of the guide track (17) and the reception device (36) of the carrier (15).

5. A linear motor system (11) according to any one of the preceding claims, wherein the predetermined position of the transmission device (35) is different from positions along the guide track (17) at which an activation of the energy consumer (41) is provided.

6. A linear motor system (11) according to any one of the preceding claims, wherein the carrier (15) is configured to wirelessly transmit and receive information which in particular relates to the control of the energy consumer (41) and/or to a charge state of the energy storage device (43).

7. A linear motor system (11) according to claim 6,
wherein the reception device (36) of the carrier (15) and the transmission device (35) of the guide track (17) are additionally configured to transmit and receive the information.

8. A linear motor system (11) according to claim 6 or 7,
wherein the carrier (15) further has an additional communication device (49) which is in direct wireless contact with the control device (51) of the linear motor system (11).

9. A linear motor system (11) according to any one of the preceding claims, wherein the carrier (15) is configured to stop for a respective predetermined time duration for an energy transmission at the position of the transmission device (35) and/or at a predetermined activation position of the energy consumer (41).

10. A linear motor system (11) according to any one of the claims 1 to 8,
wherein the carrier (15) is in motion during the energy transmission and/or during an activation of the energy consumer (41).

11. A method of operating a linear motor system (11) which has a carrier (15) and a guide track (17) having a plurality of electromagnets (21) which are arranged distributed along the guide track (17) and which cooperate with a drive magnet (23) of the carrier (15) to move the carrier (15) along the guide track (17),
wherein
the carrier (15) is equipped with an energy consumer (41) and an energy storage device (43) for the energy supply of the energy consumer (41), and
at least one process station (33), at which the energy consumer (41) of the carrier (15) is activated, and at least one transmission device (35) for transmitting energy to the carrier (15) are provided along the guide track (17),
wherein the method comprises:
an energy amount which is required for an activation of the energy consumer (41) at the process station (33) being determined in a calibration phase of the linear motor system (11),
the energy amount determined in the calibration phase being transmitted to the carrier (15) by means of the transmission device (35) in an operating phase of the linear motor system (11) before the energy consumer (41) of the carrier (15) is activated at the process station (33), **characterized in that**
the energy storage device (43) of the carrier (15) is configured to store electric charge, and,
in the calibration phase of the linear motor system (11), the method further comprises:
a first charge state of the energy storage device (43) being determined before the energy consumer (41) of the carrier (15) is activated at the process station (33),
a second charge state of the energy storage device (43) being determined after the activation of the energy consumer (41) at the process station (33), and
the energy amount which is required for activating the energy consumer (41) being determined based on a difference of the first charge state and the second charge state of the energy storage device (43).

12. A method according to claim 11,
wherein, in the operating phase of the linear motor system (11), the method further comprises:
a third charge state of the energy storage device (43) being determined before the energy consumer (41) is activated at the process station (33),
a fourth charge state of the energy storage device (43) being determined after the activation of the energy consumer (41) at the process station (33),
a correction energy amount for activating the energy consumer (41) being determined based on a difference of the third charge state and the fourth charge state of the energy storage device (43),
a deviation between the energy amount determined in the calibration phase and the correction energy amount being determined, and
the energy amount determined in the calibration phase being updated with the correction energy amount when the deviation exceeds a predetermined threshold value.

## Revendications

1. Système de moteur linéaire (11), en particulier système de transport, par exemple système multi-chariots, comprenant :
une voie de guidage (17) pourvue d'une pluralité d'électroaimants (21) répartis le long de la voie de guidage (17),
au moins un curseur (15) guidé par la voie de guidage (17) et mobile le long de celle-ci et comprenant un aimant d'entraînement (23) destiné à interagir avec les électroaimants (21) de la voie de guidage (17) pour déplacer le curseur (15) ; et
un dispositif de commande (51) destiné à commander le mouvement du curseur (15) par rapport à la voie de guidage (17) en commandant en correspondance les électroaimants (21),
dans lequel
le curseur (15) comprend un consommateur d'énergie (41),
la voie de guidage (17) comprend au moins un poste de traitement au niveau duquel le consommateur d'énergie du curseur est activé, et
au moins un dispositif de transmission fixe (35) prévu pour fournir de l'énergie et situé à une position prédéterminée,
le curseur (15) comprend un dispositif de réception (36) conçu pour recevoir de l'énergie du dispositif de transmission (35) de la voie de guidage (17), et
le curseur (15) comprend un dispositif de stockage d'énergie (43) connecté au dispositif de réception (36) et au consommateur d'énergie (41) et conçu pour alimenter en énergie le consommateur d'énergie (41) pendant son fonctionnement,
le dispositif de stockage d'énergie (43) du curseur (15) est conçu pour stocker une charge électrique, et
le curseur (15) comprend en outre un dispositif électronique (45) prévu pour commander le consommateur d*énergie (41),
**caractérisé en ce que**
le dispositif électronique (45) sous la forme d'un processeur est en communication avec un dispositif (47) de détection d'un état de charge du dispositif de stockage d'énergie (43), qui détermine, pendant une phase d'étalonnage du système de moteur linéaire (11), un premier état de charge du dispositif de stockage d'énergie (43) avant l'activation du consommateur d'énergie (41) du curseur (15) au niveau du poste de traitement (33), et qui détermine un deuxième état de charge du dispositif de stockage d'énergie (43) après l'activation du consommateur d'énergie (41) au niveau du poste de traitement (33), et
pendant une phase de fonctionnement du système de moteur linéaire (11),
le dispositif de transmission (35) transmet au curseur (15) une quantité d'énergie, nécessaire à l'activation du consommateur d'énergie (41) et déterminée à l'aide d'une différence entre le premier état de charge et le deuxième état de charge du dispositif de stockage d'énergie (43), avant d'activer le consommateur d'énergie du curseur au niveau du poste de traitement.

2. Système de moteur linéaire (11) selon la revendication 1,
dans lequel le dispositif de réception (36) est conçu pour recevoir sans contact physique l'énergie du dispositif de transmission (35).

3. Système de moteur linéaire (11) selon la revendication 1 ou 2,
dans lequel le dispositif de transmission (35) de la voie de guidage (17) et le dispositif de réception (36) du curseur (15) comprennent chacun au moins une bobine (37, 40), et ladite au moins une bobine (37) du dispositif de transmission (35) est couplée par induction à ladite au moins une bobine (40) du dispositif de réception (36) lorsque le dispositif de réception (36) se trouve au sein d'une distance prédéterminée par rapport au dispositif de transmission (35).

4. Système de moteur linéaire (11) selon la revendication 3,
dans lequel un couplage inductif par résonance, dans lequel les bobines respectives (37, 40) sont accordées à la même fréquence, est prévu entre le dispositif de transmission (35) de la voie de guidage (17) et le dispositif de réception (36) du curseur (15).

5. Système de moteur linéaire (11) selon l'une des revendications précédentes,
dans lequel la position prédéterminée du dispositif de transmission (35) est différente des positions le long de la voie de guidage (17) dans lesquelles il est prévu d'activer le consommateur d'énergie (41).

6. Système de moteur linéaire (11) selon l'une des revendications précédentes,
dans lequel le curseur (15) est conçu pour émettre et recevoir sans fil des informations relatives en particulier à la commande du consommateur d'énergie (41) et/ou à l'état de charge du dispositif de stockage d'énergie (43).

7. Système de moteur linéaire (11) selon la revendication 6,
dans lequel le dispositif de réception (36) du curseur (15) et le dispositif de transmission (35) de la voie de guidage (17) sont en outre conçus pour émettre et recevoir les informations.

8. Système de moteur linéaire (11) selon la revendication 6 ou 7,
dans lequel le curseur (15) comprend en outre un dispositif de communication supplémentaire (49) qui est en contact direct sans fil avec le dispositif de commande (51) du système de moteur linéaire (11).

9. Système de moteur linéaire (11) selon l'une des revendications précédentes,
dans lequel le curseur (15) est conçu pour s'arrêter à la position du dispositif de transmission (35) et/ou à une position prédéterminée d'activation du consommateur d'énergie (41) pendant une durée prédéterminée respective pour la transmission d'énergie.

10. Système de moteur linéaire (11) selon l'une des revendications 1 à 8, dans lequel le curseur (15) est en mouvement pendant la transmission d'énergie et/ou pendant une activation du consommateur d'énergie (41).

11. Procédé de fonctionnement d'un système de moteur linéaire (11) comprenant un curseur (15) et une voie de guidage (17) munie d'une pluralité d'électroaimants (21) répartis le long de la voie de guidage (17), qui interagissent avec un aimant d'entraînement (23) du curseur (15) pour déplacer le curseur (15) le long de la voie de guidage (17),
dans lequel
le curseur (15) est équipé d'un consommateur d'énergie (41) et d'un dispositif de stockage d'énergie (43) pour alimenter en énergie ledit consommateur d'énergie (41), et
le long de la voie de guidage (17) sont prévus au moins un poste de traitement (33) au niveau duquel le consommateur d'énergie (41) du curseur (15) est activé, ainsi qu'au moins un dispositif de transmission (35) destiné à transmettre l'énergie au curseur (15),
le procédé consistant à :
déterminer, pendant une phase d'étalonnage du système de moteur linéaire (11), une quantité d'énergie nécessaire à l'activation du consommateur d'énergie (41) au niveau du poste de traitement (33),
transmettre au curseur (15) la quantité d'énergie, déterminée pendant la phase d'étalonnage, au moyen du dispositif de transmission (35) pendant une phase de fonctionnement du système de moteur linéaire (11), avant d'activer le consommateur d'énergie (41) du curseur (15) au niveau du poste de traitement (33),
**caractérisé en ce que**
le dispositif de stockage d'énergie (43) du curseur (15) est conçu pour stocker une charge électrique, et
pendant la phase d'étalonnage du système de moteur linéaire (11), le procédé consiste en outre à :
déterminer un premier état de charge du dispositif de stockage d'énergie (43) avant d'activer le consommateur d'énergie (41) du curseur (15) au niveau du poste de traitement (33),
déterminer un deuxième état de charge du dispositif de stockage d'énergie (43) après avoir activé le consommateur d'énergie (41) au niveau du poste de traitement (33), et
déterminer la quantité d'énergie nécessaire à l'activation du consommateur d'énergie (41) à l'aide d'une différence entre le premier état de charge et le deuxième état de charge du dispositif de stockage d'énergie (43).

12. Procédé selon la revendication 11,
dans lequel, pendant la phase de fonctionnement du système de moteur linéaire (11), le procédé consiste en outre à :
déterminer un troisième état de charge du dispositif de stockage d'énergie (43) avant d'activer le consommateur d'énergie (41) au niveau du poste de traitement (33) ;
déterminer un quatrième état de charge du dispositif de stockage d'énergie (43) après avoir activé le consommateur d'énergie (41) au niveau du poste de traitement (33) ;
déterminer une quantité d'énergie corrective pour l'activation du consommateur d'énergie (41) à l'aide d'une différence entre le troisième état de charge et le quatrième état de charge du dispositif de stockage d'énergie (43) ;
déterminer un écart entre la quantité d'énergie déterminée pendant la phase d'étalonnage et la quantité d'énergie corrective, et
mettre à jour la quantité d'énergie, déterminée pendant la phase d'étalonnage, avec la quantité d'énergie corrective si l'écart dépasse une valeur seuil prédéterminée.
